# EUROPEAN PATENT APPLICATION

(11) **EP 4 700 687 A1**
(43) Date of publication of application: **25.02.2026**
(21) Application number: 25197454.9
(22) Date of filing: 21.08.2025
(51) Int. Cl.: G06Q 30/0251, G06N 3/0475, G06Q 30/0241

(54) **GENERATIVE AI CREATIVE PLATFORM**

(30) Priority: 22.08.2024 US 202463685968 P; 09.07.2025 US 202519264214
(71) Applicant: NBCUniversal Media, LLC, New York, NY 10112 (US)
(72) Inventor: MANCHESTER, Eric, New York, 10112 (US)
(74) Representative: Keltie LLP

(57) **Abstract**

Systems and methods for custom creative generation are provided herein. An electronic request to generate a custom creative from a digital content is received. Available creative layers for use in the custom creative are identified based at least in part upon one or more data tags associated with the digital content. The one or more data tags indicate creative features of the digital content. Machine learning is used to identify a subset of the available creative layers based upon generation criteria associated with the electronic request. The custom creative is generated by combining the subset of available creative layers. An electronic response is generated and provided in response to the electronic request. The electronic response includes an indication of the custom creative.

## Description

### CROSS-REFERENCE TO RELATED APPLICATIONS

This application claims priority to U.S. Provisional Application No. 63/685,968, entitled "GENERATIVE AI CREATIVE PLATFORM," filed August 22, 2024.

### TECHNICAL FIELD

The present disclosure relates generally to improved systems and techniques for generating creatives (e.g., advertisements/content) using creative campaign rules and artificial intelligence (AI). Specifically, an AI creative engine may be tasked with generating, via AI, a creative from scratch and/or creative modifications of a creative template to meet creative campaign criteria.

### BACKGROUND

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Traditionally, creative creation has been a time consuming process of iterative manual generation of creative content that may or may not be effective with a viewing audience. Lack of creative effectiveness may result in lost revenues. For example, in advertising content, advertisers have typically generated a draft advertisement (e.g., draft commercial) and then tested the draft advertisement with, for example, a limited-size control group to determine various aspects of the draft advertisement that play well and/or do not play well to the control group. Based on an outcome of the vetting and testing techniques, the final advertisement employed in an advertisement campaign may be altered from the draft advertisement. In some cases, iterations of vetting occur before finalized content is created. As may be appreciated, the nature of the type of manual creation may be quite costly, both monetarily and in time.

Further, in traditional advertisement campaigns (e.g., digital advertisement campaigns), advertisers may require a certain number of targeted impressions from one or more target audiences. The one or more target audiences may correspond to, for example, particular age ranges, socioeconomic factors, known purchasers or enthusiasts of particular products or services, etc. Traditional advertisement techniques include identifying which audience members of an audience belong to the one or more target audiences, and then displaying the advertisement to the identified audience members belonging to the one or more target audiences. In this way, the advertisement is concentrated on target audience members that are more likely to buy or otherwise interact with a product or service at issue in the advertisement.

While traditional techniques such as those described above are somewhat effective in accommodating advertisers and improving advertisement sales relative to, for example, certain other traditional advertisement campaigns (e.g., linear advertisement campaigns) that do not adequately target specific audience members, the singular advertisement displayed to the target audience is not always ideal for each audience member within the target audience. That is, even if the advertisement is played to the target audience, the advertisement is typically generic to all audience members within the target audience, and not all audience members within the target audience will be receptive to various aspects (e.g., creative aspects) of the advertisement. As an example, the singular advertisement may include a singular story line and/or a singular composition that is not tailored to (or suitable for) each member in the target audience. Accordingly, improved systems and methods are desired. Thus, new and improved techniques that enable more dynamic creatives, targeted to individuals, in a rapid manner are desirable.

### SUMMARY OF THE INVENTION

According to an aspect of the present invention, there is provided a system comprising: a creative engine comprising one or more generative artificial intelligence (AI) models, the creative engine configured to: receive an electronic request to generate a custom creative; identify available creative layers for use in the custom creative based at least in part upon one or more data tags associated with digital content; select a subset of the available creative layers based upon generation criteria associated with the electronic request; use the one or more generative AI models to generate the custom creative by combining the subset of available creative layers; and generate and provide an electronic response to the electronic request, wherein the electronic response comprises an indication of the custom creative.

The digital content may comprise digital content owned by an organization tasked with creating the custom creative.

The system may comprise a content contextualization service configured to: generate the one or more data tags by analyzing a subset of the digital content using AI, one or more large language models applied to one or more transcripts or subtitles of the subset of the digital content, or both.

The content contextualization service may be configured to identify licensing arrangements associated with the one or more data tags. The content contextualization service, the creative engine, or both may be configured to: identify the available creative layers based upon the licensing arrangements.

The system may comprise a creative request interface that comprises an application programming interface (API) configured to: enable a creative provisioning service, a creative request dashboard, or both to submit criteria for the custom creative; and generate and transmit the electronic request to the creative engine in accordance with the submitted criteria for the custom creative.

The API may be configured to receive the submitted criteria in a natural language prompt. The creative request interface may comprise a large language model configured to interpret the natural language prompt to identify the criteria.

The creative engine may be configured to: determine whether a pre-existing creative is in accordance with the generation criteria and when a pre-existing creative is in accordance with the generation criteria, preserve processing resources, by providing the pre-existing creative in the provided electronic response in lieu of generating the custom creative and providing the custom creative in the electronic response.

The system may comprise a viewer contextualization service configured to identify supplemental criteria based at least in part upon the criteria submitted by the creative provisioning service, the creative request dashboard, or both.

The content provisioning service may comprise an advertisement service that submits the criteria in response to a client device providing playback of primary content that comprises an advertisement break to insert, on-the-fly, an advertisement selected by the advertising service.

The creative engine may be configured to: identify whether the generation criteria comprises an indication of a template creative; and when the generation criteria comprises the template creative, generate the custom creative based upon the template creative.

The generation criteria may comprise the indication of the template creative. The creative engine may be configured to: identify one or more modification permissions of the template creative; and generate the custom creative in accordance with the one or more modification permissions.

According to a further aspect of the present invention, there is provided a computer-implemented method comprising: receiving an electronic request to generate a custom creative from a digital content; identifying available creative layers for use in the custom creative based at least in part upon one or more data tags associated with the digital content, the one or more data tags indicating creative features of the digital content; selecting, via machine learning, a subset of the available creative layers based upon generation criteria associated with the electronic request; generating, via one or more generative artificial intelligence (AI) models, the custom creative by combining the subset of available creative layers; and generating and providing an electronic response to the electronic request, wherein the electronic response comprises an indication of the custom creative.

The computer-implemented method may comprise generating the one or more data tags, by: applying one or more large language models to one or more transcripts or subtitles of the digital content to identify at least a subset of the creative features of the digital content; and associating the data tags with the digital content, based upon the identified at least subset of the creative features of the digital content.

The computer-implemented method may comprise: receiving submission of criteria for the custom creative via an application programming interface (API); and generating and transmitting the electronic request in accordance with the submitted criteria for the custom creative.

The computer-implemented method may comprise receiving the submitted criteria in a natural language prompt; and interpreting the natural language prompt via a natural language processor to identify the criteria.

The computer-implemented method may comprise determining whether a pre-existing creative has been generated in accordance with the generation criteria; and when a pre-existing creative has been generated in accordance with the generation criteria, preserve processing resources, by providing the pre-existing creative that is in accordance with the generation criteria in the provided electronic response in lieu of generating the custom creative and providing the custom creative in the electronic response.

The computer-implemented method may comprise receiving advertisement criteria from an electronic advertisement service in response to a client device providing playback of primary content that comprises an advertisement break; generating the custom creative in accordance with the advertisement criteria; and providing the custom creative for on-the-fly insertion in the advertisement break.

The computer-implemented method may comprise identifying whether the generation criteria comprises an indication of a template creative; and when the generation criteria comprises the template creative, generate the custom creative based upon the template creative.

According to a further aspect of the present invention, there is provided a tangible, non-transitory, computer-readable medium, comprising computer-readable instructions that, when executed by one or more processors of one or more computers, cause the one or more computers to: receive an electronic request to generate a custom creative from a digital content; identify available creative layers for use in the custom creative based at least in part upon one or more data tags associated with the digital content, the one or more data tags indicating creative features of the digital content; select, via machine learning, a subset of the available creative layers based upon generation criteria associated with the electronic request; generate, via one or more generative artificial intelligence (AI) models, the custom creative by combining the subset of available creative layers; and generate and provide an electronic response to the electronic request, wherein the electronic response comprises an indication of the custom creative.

The tangible, non-transitory, computer-readable medium may comprise computer-readable instructions that, when executed by the one or more processors of the one or more computers, cause the one or more computers to: receive advertisement criteria from an electronic advertisement service in response to a client device providing playback of primary content that comprises an advertisement break; generate the custom creative in accordance with the advertisement criteria; and provide the custom creative for on-the-fly insertion in the advertisement break.

### BRIEF DESCRIPTION

Certain aspects commensurate in scope with the originally claimed subject matter are summarized below. These aspects are not intended to limit the scope of the claimed subject matter, but rather these aspects are intended only to provide a brief summary of possible forms of the subject matter. Indeed, the subject matter may encompass a variety of forms that may be similar to or different from the aspects set forth below.

Customized advertisement techniques are employed to identify each audience member's preferences and to customize or tailor advertisements (which may also be referred to as ads) based on each audience member's preferences. That is, instead of displaying a generic advertisement to a number of audience members within an audience (e.g., target audience), a customized advertisement may be generated in view of each audience member's preferences within the audience (e.g., the target audience). As described in detail below, customizable features may be pre-recorded and then selected based on the preferences of a particular audience member, or customizable features may be generated based on artificial intelligence (AI) techniques.

As an example, an advertisement may include a slogan that can be uttered by a number of different talents, where presently disclosed techniques include selecting a first talent (e.g., a particular male actor) from the number of different talents based on a first audience member's preferences (e.g., the first audience member is known to watch a show having the male actor, the first audience member is known to be more receptive to a male voice, etc.) for playback of a first customized advertisement to the first audience member, and selecting a second talent (e.g., a particular female actor) from the number of different talents based on a second audience member's preferences (e.g., the second audience member is known to watch a show having the female actor, the second audience member is known to be more receptive to a female voice, etc.) for playback of a second customized advertisement to the second audience member. In some embodiments, a computer-created voice may be employed through a combination of multiple talents (e.g., various talents corresponding to a particular audience member's known preferences). As another example, an advertisement may include a background song that can be selected from a number of different background songs, where presently disclosed techniques include selecting a first background song (e.g., upbeat song) based on a first audience member's preferences for playback of a first customized advertisement to the first audience member, and selecting a second background song (e.g., downbeat song) based on a second audience member's preferences for playback of a second customized advertisement to the second audience member. Multiple layers may be employed in certain embodiments. For example, selection of the talent(s) described above may correspond to a first customizable layer of an advertisement and selection of the background song(s) described above may correspond to a second customizable layer of the advertisement. Other customizable layers may include a color scheme of the advertisement, a script of the advertisement, a pace of the advertisement, a length of the advertisement, selection of information (e.g., inclusion or non-inclusion of product or service pricing) displayed in the advertisement, etc. In some embodiments, a template advertisement having certain basic features is employed and the various layers are added to the template advertisement based on the above-described identification of individual audience member preferences. Further, in some embodiments, an organization owning a vast library of content can leverage the owned content to generate new video and/or audio content when appropriate. As an example, a customized advertisement for a particular audience member may include Mona Lisa rendered as a woman walking down the road repeating a mash-up in a combined style of a show in the owned content library that the particular audience member enjoys with and another program that the particular audience member is currently or has recently watched.

While the above-described techniques may be employed in the context of pre-recorded or pre-determined layers selectable in view of an audience member's preferences, other embodiments may employ AI techniques to generate customized or tailored advertisements for each audience member of an audience (e.g., target audience). For example, an AI prompt may be written to intake preferences of a particular audience member and then generate customized aspects of the advertisement tailored to the particular audience member based on the preferences. Such AI techniques may enable more fine-tuned customizable features of the customized advertisement, may improve efficiency of generating the customized advertisement, and may reduce cost of generating the customized advertisement, among other technical benefits.

Further to the points above, different advertisement services may be offered to advertisers based on their needs. For example, a first service may be offered whereby customized advertisements are generated on the fly with little to no human auditing of the customized advertisement, a second service may be offered whereby customized advertisements are audited by a human and/or AI before playback to a particular audience member, etc. Further, advertisement services may be offered with or without access to platform-specific or company-specific intellectual property rights, asset rights, name, image, and likeness (NIL) rights, etc. In this way, certain content of the advertisement may be produced by the advertiser, while certain other content of the advertisement may be provided by the platform on which the advertisement is intended to be played.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram, illustrating a system for generating customized creatives, in accordance with certain aspects of the current application;
FIG. 2 is a flowchart, illustrating a process for generating custom creatives, in accordance with certain aspects of the current application;
FIG. 3 is a flowchart, illustrating a process for identifying, from an owned content library, creative layers that may be used in creative generation, in accordance with certain aspects of the current application;
FIG. 4 is a flowchart, illustrating a process for fulfilling advertisement requests via an advertisement server, in accordance with certain aspects of the current application; and
FIG. 5 is a flowchart, illustrating a process for generating creatives using identified layers, in accordance with certain aspects of the current application.

### DETAILED DESCRIPTION

One or more specific aspects of the present disclosure will be described below. In an effort to provide a concise description of these aspects, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various aspects of the present disclosure, the articles "a," "an," "the," and "said" are intended to mean that there are one or more of the elements. The terms "comprising," "including," and "having" are intended to be inclusive and mean that there may be additional elements other than the listed elements.

As discussed in greater detail below, the present aspects described herein facilitate custom creation generation either on the fly or prior to an initial use of the creative. Organizationally-owned content libraries may be used to create content layers that may be used in subsequently generated custom creatives.

To enable creative generation without reliance on human subjectivity, machine learning may be implemented to identify content that will satisfy target objectives provided in a creative generation request. As used herein, the machine learning may refer to algorithms and statistical models that a creative generation engine may use to perform a specific task with or without explicit instructions. For example, a machine learning process may generate a mathematical model based on a sample of the clean data, known as "training data," in order to make predictions or decisions without being explicitly programmed to perform the specific task. Depending on the inferences to be made, different machine learning algorithms may be used to analyze the data.

In some scenarios, a supervised machine learning algorithm may be implemented using a mathematical model of a set of data samples referred to as the "training data" and containing both inputs and desired outputs. Each data sample may include one or more inputs and corresponding desired one or more outputs, also known as supervisory signals. In the mathematical model, each data sample may be represented by an array or vector, sometimes called a feature vector, and the training data may be represented by a matrix. Through iterative optimization of an objective function, the supervised machine learning algorithm may learn a function (e.g., optimal function) that can be used to predict outputs associated with new inputs. That is, the optimal function may allow the supervised machine learning algorithm to correctly predict corresponding outputs for certain inputs that are not presented in the training data. Such an algorithm that improves the accuracy of its outputs or predictions over time is said to have learned to perform the specific task.

Supervised learning algorithms may include classification and regression. Classification algorithms are used when the outputs are restricted to a limited set of values, and regression algorithms are used when the outputs may have any numerical value within a range. Similarity learning is an area of supervised machine learning closely related to regression and classification, but the goal is to learn from examples using a similarity function that measures how two objects (e.g. two sets of measured performance data from two different systems) are similar or related.

Additionally and/or alternatively, in some scenarios, an unsupervised machine learning algorithm may be implemented (e.g., when particular output types are not known). The unsupervised learning algorithm may take a set of data samples that contains only inputs, and find structure in the driving data samples, such as grouping or clustering of the data samples. The unsupervised learning algorithm, therefore, learn from the data samples that have not been labeled, classified, or categorized. Instead of responding to feedback, unsupervised learning algorithms identify commonalities in the data and react (e.g., predict outputs) based on the presence or absence of such commonalities in each new piece of data.

Cluster analysis is the assignment of a set of observations (e.g., on data samples) into subsets (called clusters) so that observations within the same cluster are similar according to one or more predesignated criteria (e.g., conditions), while observations drawn from different clusters are dissimilar. Different clustering techniques make different assumptions on the structure of the data, often defined by some similarity metric and evaluated, for example, by internal compactness, or the similarity between objects of the same cluster.

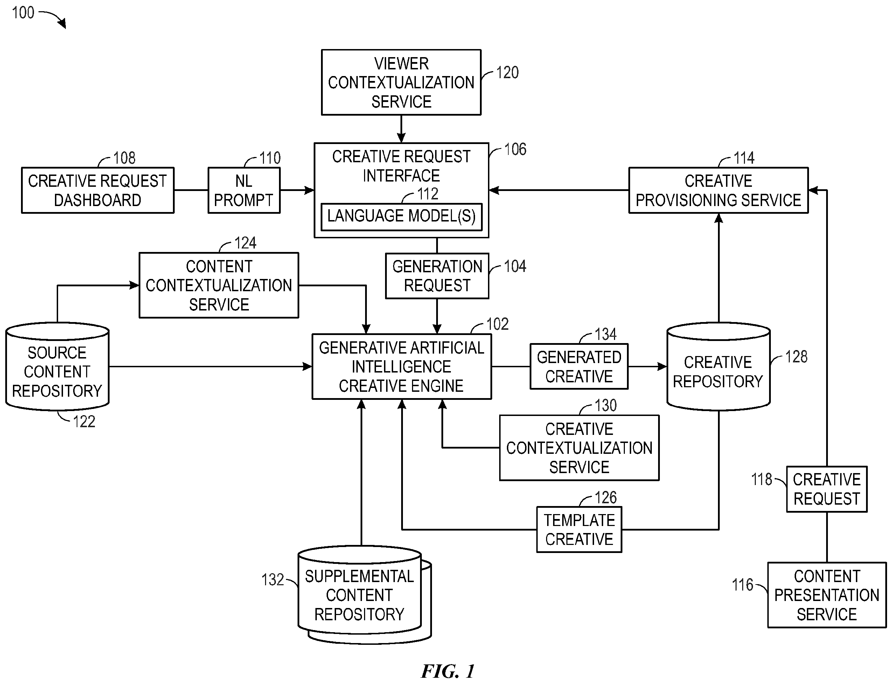

Starting first with a discussion of the overall system, FIG. 1 is a schematic diagram, illustrating a system 100 for generating customized creatives, in accordance with certain aspects of the current application. As illustrated, the system 100 may include a Generative Artificial Intelligence (AI) Creative Engine 102 (herein referred to as the "Creative Engine"). The Creative Engine 102 may be tasked with generating custom creatives based upon generation requests 104 submitted to the Creative Engine 102, for example via a Creative Request Interface 106.

The Creative Request Interface 106 may include, for example, an Application Programming Interface (API) that enables a plurality of connections to other systems and/or services. These connections may allow the connected systems and/or services to provide custom requests that may ultimately result in provision of the generation request 104 to the Creative Engine 102. For example, in some scenarios, a Creative Request Dashboard 108 may include a graphical user interface (GUI) that enables users (e.g., advertising personnel) to provide a request for generation of a creative, while providing criteria and/or guidance regarding the creative aspects of the creative. In some instances, the GUI may provide a natural language input, enabling users to provide a natural language prompt 110 representing the request. In this manner, the users may use natural language to request the creative in lieu of complex GUI interactions that may provide unnecessary complexity. The system may include one or more language models 112 (e.g., a large language model (LLM) and/or one or more small language models (SLMs) targeting particular focus areas of work) that may derive the necessary information from the natural language prompt 110 for generation of the Generation Request 104.

Initially, the prompt(s) 110 may be generated with human input. However, as time progresses and feedback with respect to the creatives generated from the prompt(s) 110 is received, prompt 110 generation may be supplemented with machine-generated guidance, thus enabling prompt(s) 110 to become more effective over time. Data science services may determine particular components of the prompt(s) 110 that have desirable results and/or components of the prompt(s) 110 that have undesirable results based upon generated creative feedback. For example, when the generated creative is what a user requested/expected, components of the prompt(s) may be seen as effective. However, when subsequent tweaks are requested and/or a user expresses concern/disappointment with a feature of the generated creative, the component of the prompt(s) 110 resulting in this feature (or lack thereof) may be identified as ineffective. For ineffective prompt components, machine-assistance may be provided to help facilitate more effective prompts 110.

In another example, a Creative Provisioning Service 114, such as a server, which may be referred to as an advertisement server, may also be enabled to request creative generation through the Creative Request Interface 106. A request may be triggered from the Creative Provisioning Service 114, for example, when a Content Presentation Service 116 encounters an advertisement break during playback of content and submits a creative request 118.

The system 100 may include a viewer contextualization service 120, which may identify context for an audience of the creative to be generated. In some instances, the audience may be a particular user, while in other instances, the audience may be a target group of users. The viewer contextualization service 120 may maintain and/or predict (e.g., via machine learning) particular criteria of the audience to request in the generated creative. In other words, the viewer contextualization service 120 may supplement criteria provided by the requesting service(s) (e.g., the Creative Request Dashboard 108 and/or the Creative Provisioning Service 114) and provide the supplemental criteria for use in generating the creative.

As discussed herein, the Creative Engine 102 may build creatives by generating creative layers from organizationally owned content libraries. For example, in system 100, the Source Content Repository 122 may store television shows, movies, audio files, etc. owned by an organization. As may be appreciated, this repository may include vast amounts of content spanning numerous years. A Content Contextualization Service 124 may be tasked with curating the content, by categorizing/contextualizing the content for use by the Creative Engine 102. For example, computer vision may be applied to video data to identify creative features of the content. Language learning models may be used to analyze subtitles and/or transcripts to identify other creative features. The content may be tagged with the creative features identified by the Content Contextualization Service 124 and/or metadata identifying the creative features may be provided directly to the Creative Engine 102. Further, the Content Contextualization Service 124 may identify licensing constraints for the tagged creative features. These licensing constraints may be used to identify permitted creative features for use in generated creatives. These permitted creative features may be used as layers of generative creatives generated by the Creative Engine 102.

Depending on the criteria of the Generation Request 104, the generated creative may be derived from scratch by applying layers or may be generated by modifying a template creative 126, which acts a creative template. The template creative 126 may be retrieved from a creative repository 128. When a template creative 126 is used as a creative template, a Creative Contextualization Service 130 may provide context regarding the template creative 126, such as what features of the template creative 126 may be adjusted, creative sentiment of the template creative 126, etc.

The Creative Engine 102 may also retrieve data from supplemental content repositories 132 that may be useful for generative effective creatives. For example, the supplemental content repositories 132 may store characteristics (e.g., models) of the objects of the creative and/or additional audience demographics that may be used by the Creative Engine to make creative decisions (e.g., via a machine learning model).

Applying the criteria, available creative layers, and supplemental content to the generative machine learning models, the Creative Engine 102 may generate a new creative 134. The new creative 134 may be submitted for storage in the creative repository 128, where the new creative 134 may be accessed and provided (e.g., by the Creative Request Dashboard 108 and/or the Creative Provisioning Service 114).

The Creative Engine 102 may track components of content used as the basis of the new creative 134, such as content from the source content repository 122. In this manner, royalties may be paid, when applicable (e.g., as indicated by the Content Contextualization Service 124) for use of the components.

As may be appreciated, the system 100 of FIG. 1 could provide a new creative 134 in exchange for monetary compensation. In some situations, for example, a bidding process may be employed, enabling bidders to bid for available generation time, placement time, etc. of a creative 134 generated via the Generative AI Creative Engine 102.

Content created via the Generative AI Creative Engine 102 may be priced differently than placement bidding for traditional creatives, as the AI generated content may include more dynamic themes/personalization and, thus, may be more valuable than traditional content. For example, personalized content may be generated for a particular "fandom" or group of users with a particular common interest. Language models, such as LLMs and/or Small Language Models (SLMs) targeting an area of work (e.g., particular fandoms, particular creative topics, etc.) may be powered/trained via the content that interests the fandoms, enabling creation of customized content particularly interesting to the fandom. For example, a creative may be generated using sets or other content of a TV show for a particular fandom of that TV show. In this manner, creatives 134 created via the Generative AI Creative Engine 102 may be more customizable and desirable for particular target audiences.

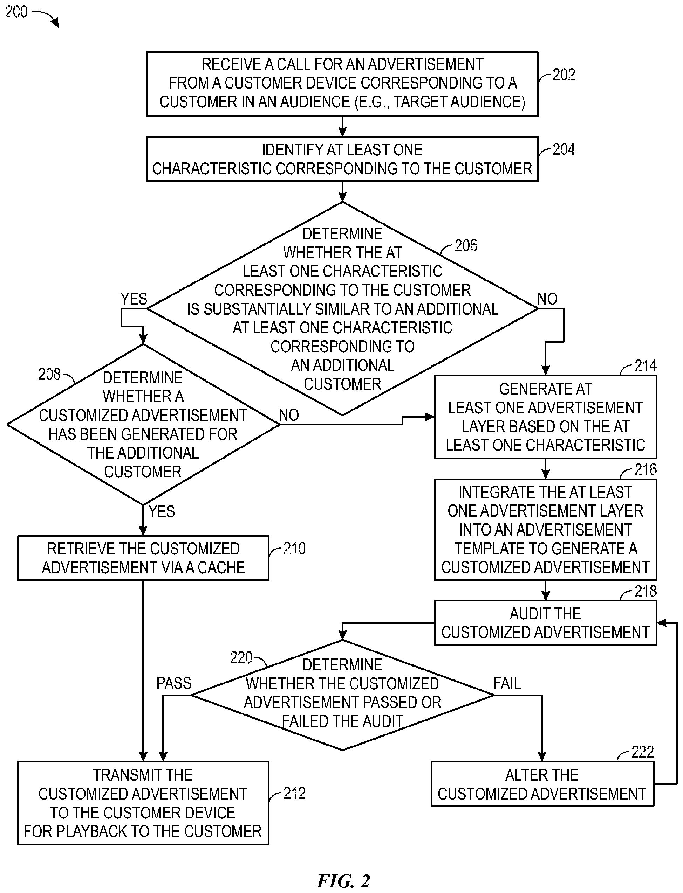

Turning now to automated creative generation, FIG. 2 is a flowchart, illustrating a process 200 for generating custom creatives, in accordance with certain aspects of the current application. The process 200 begins with receiving a call (e.g., electronic request) for a creative (e.g., advertisement) (block 202). For example, the call may originate based upon actions performed on a client electronic device operated by a user, such as requesting playback of primary content that includes advertisement breaks where creatives are played back. The user may be a customer in an audience, such as a customer in a target audience. For example, certain advertisement campaigns require a minimum number of impressions from customers belonging to a target audience. The target audience may include, for example, customers within a particular age range, of a particular economic status (e.g., income level), at a particular residence location, known to have purchased or been interested in purchasing particular products or services, and/or that meet some other pre-defined demographic characteristic(s). Customers within the target audience may be identified, for example, by way of a database or other medium storing customer IDs (e.g., IP address, platform ID, etc.) and characteristics (e.g., demographic information) corresponding to the customer IDs.

One or more user characteristics of the user triggering the call are identified (block 204). For example, the user characteristics may include demographic information (e.g., age, gender, interests, hobbies, favorite primary content preferences (e.g., genre, titles, favorite talent (e.g., actor), etc.), favorite or favored song or musical genre, a favorite or favored color, etc.) that may be useful for identifying the user as a member of the target audience and/or identifying layers of the creative to be generated for the user. In some cases, these characteristics may be identified in near-real time via digital information associated with the user (e.g., on one of the user's electronic devices). For example, favorite primary content preferences may be identified based upon primary content playback history (e.g., associated with one or more streaming services). Favored songs and/or musical genres may be identified based upon playback history of music services and/or apps. A favored color may be identified, for example, based upon a selected color theme and/or background of a user's electronic device. In some instances, when the creative will use layers associated with the primary content that the creative will be inserted into, the user characteristics may include characteristics of the primary content that the user is watching.

To avoid duplication of creative generation, a determination may be made as to whether the one or more user characteristics are substantially similar (e.g., within a threshold degree of similarity) with other known user characteristics of other users (decision block 206). In an aspect, user characteristics for a first user may be substantially similar to the user characteristics of a second user if the first user and the second user share threshold number of characteristics (e.g., same age group, same gender, same actor preferences, same musical genre preferences). The threshold number may, for example, be 5, 10, or 15 shared characteristics. If the first user has substantially similar user characteristics as other users, a determination is made as to whether a customized creative has been generated for the other users that have matching characteristics (decision block 208). If so, the existing generated creative may be retrieved from a datastore (e.g., a cache) (block 210) and transmitted to the client device for playback (block 212).

If, however, at decision block 206, there are no other users with substantially similar one or more characteristics or, at decision block 206, no custom creatives have been previously generated for the other users, at least one creative layer is generated based upon the one or more characteristics (block 214). The at least one creative layer may be selected, for example, from a number of pre-recorded or otherwise pre-defined creative layers. As an example, if the at least one characteristic indicates that the customer's favorite actor is John Doe, and the number of pre-recorded or otherwise pre-defined creative layers includes a first layer in which John Doe utters a slogan of the advertiser and a second layer in which Jane Doe utters the slogan of the advertiser, the first layer in which John Doe utters the slogan of the advertiser may be selected. Similar techniques may be employed to select, based on the at least one characteristic, a background music layer from a number of pre-recorded or pre-determined background music layers, an ambient lighting layer from a number of pre-recorded or pre-determined ambient lighting layers, etc.

In some aspects, generating the at least one creative layer based on the at least one characteristic corresponding to the customer may include Artificial Intelligence (AI) techniques (e.g., in lieu of, or in addition to, the pre-recorded or otherwise pre-determined layers described above). For example, a generative AI (GenAI) script or prompt may be supplemented with the at least one characteristic corresponding to the customer and identified. As an example, the GenAI script or prompt may include a direction to generate AI dictation of the slogan of the advertiser that, when supplemented with the name of the customer's favorite actor, such as John Doe, produces audio (and, in some embodiments, video) of John Doe uttering the slogan of the advertiser. Other examples are also possible for generating other layers of the creative, such as a background music layer, an ambient lighting layer, etc.

In some embodiments, certain creative layers may be generated based on approval by the advertiser and/or the media business operating the platform in business with the advertiser. As an example, the media business and/or platform may make certain creative layers available to the advertiser based on a purchase arrangement therebetween, such as creative layers corresponding to talents (e.g., actors, talk show hosts, etc.) contracted with the media business, advertisement layers corresponding to content (e.g., movies, shows, etc.) owned by the media business, etc. These features may be programmed into the GenAI script or prompt based on the purchase arrangement(s) between the advertiser and the media business.

The creative layer(s) may be integrated into a creative template to generate a custom creative (block 216). The creative template may include, for example, certain baseline aspects, such as a certain starting and/or ending visual or slide, certain text, certain background settings, etc. Integration of the at least one creative layer generated into the creative template may be automated and/or based on additional AI techniques. Further, in some aspects, the custom creative may be produced from scratch and without an advertisement template into which one or more generated creative layers are integrated.

Prior to provision of the generated custom creative, an audit of the custom creative may be performed (block 218). In some aspects, auditing the customized advertisement may be user/customer-specific. That is, auditing the custom creative may be based on an age of the customer and/or censorship settings corresponding to the customer, customer ID, or client device, a geographic location (and corresponding regulations) in which the customer or customer device resides, etc. Auditing may be performed manually, may be automated, and/or may be performed via additional AI/ML techniques. In some aspects, only certain custom creatives are audited, for example, over a large enough sample to ensure creative compliance, ensure creative integrity, and/or for purposes of quality assurance.

A determination is made as to whether the customized creative passes or fails the audit (decision block 220). If the custom creative passes the audit, the custom creative is transmitted to the client device for playback (including via an advertisement server) (block 212). However, if the custom creative fails the audit, the custom creative may be altered (e.g., based upon an indication of a reason for the failure provided from the audit process) (block 222). For example, the custom creative generation process may be reexecuted with a revised Generative AI script, refreshed criteria, and/or a revised prompt. The custom creative may then be re-audited (block 218) and re-altered (block 222) until the custom creative passes the audit and is transmitted to the client device for playback (block 212).

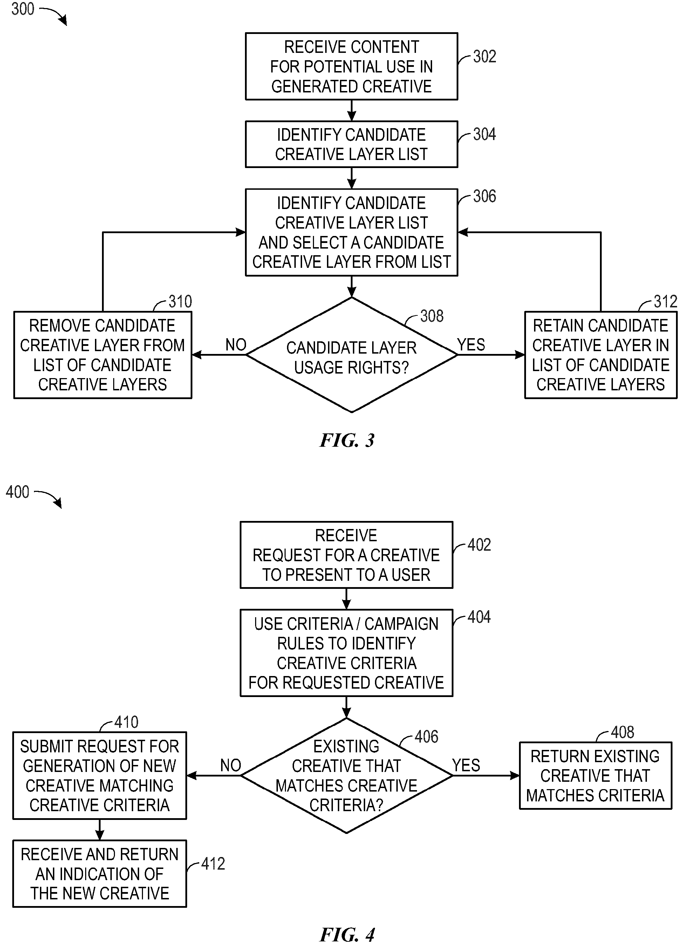

FIG. 3 is a flowchart, illustrating a process 300 for identifying, from an owned content library, creative layers that may be used in creative generation, in accordance with certain aspects of the current application. The process 300 begins with receiving content for potential use in generated creatives (block 302). As mentioned above, this content may be an organization's owned content library. The content may specify (e.g., in associated metadata) creative features that may be customized for the content.

Candidate Creative Layers are identified and added to a candidate layer list (block 304). As described above, the layers may be identified by identifying the creative features of the received content (e.g., from associated metadata).

For each identified creative feature, a particular creative feature is selected (block 306) and a determination is made as to whether usage rights exist for the creative feature (decision block 308). If usage rights do not exist, the candidate creative layer associated with this feature is removed from the candidate layer list (block 310) and the next candidate creative layer is selected for usage right determination.

If usage rights do exist for a selected candidate creative layer, the selected candidate creative layer is retained in the list of candidate creative layers (block 312). This process continues until all candidate layers have been analyzed for usage rights. The retained creative layers in the list may be provided to the Creative Engine 102, enabling the Creative Engine 102 to use these layers in newly generated creatives. For example, in one embodiment, the retained creative layers may be aggregated with the content into a finalized creative that is customized for the user.

FIG. 4 is a flowchart, illustrating a process 400 for fulfilling creative (e.g., advertisement) requests via an advertisement server, in accordance with certain aspects of the current application. The process 400 begins with receiving a request for a creative to present to a user (block 402). As mentioned above, there may be many paths where the request may come from. For example, the request could come from an advertisement server that is tasked with providing a creative for insertion into playback of primary content on a client device or could come from a Creative Request Tool and/or Dashboard.

Criteria (e.g., provided with the request) and/or creative campaign rules may be used to identify custom creative generation criteria (block 404). For example, the campaign rules may indicate that a parent brand should be prominently displayed in all creatives of a particular product. This may be set as generation criteria for the custom creative. Further, the request may provide demographics of the user/customer, which may be used to identify generation criteria, such as by using machine learning to identify key creative features of interest for users with the provided demographics). In an aspect, the request may be provided by a user device and/or an advertisement server to prior to or at the beginning of content playback so that the creative may be generated before the advertisement break for which the creative is to be aired or presented. In another aspect, the request for the creative may indicate whether a creative to be provided to the user may be AI generated (in part or entirely) or pre-uploaded by the advertiser associated with the advertisement campaign.

A determination is made as to whether an existing creative matches the generation criteria (decision block 406). This evaluation may be done by characterizing existing creatives via AI/machine learning, computer vision, or other automated characterization techniques.

If an existing creative matches the generation criteria, no new creative needs to be generated. Instead, the existing creative that matches the generation criteria may be returned in a response to the received request (block 408).

If, however, no existing creative matches the generation criteria, a request to generate the new creative with the generation criteria is provided (e.g., to the Creative Engine 102) (block 410). In response to the request, the new creative may be returned, which may then be transmitted to the requestor as a response to the request of block 402 (block 412).

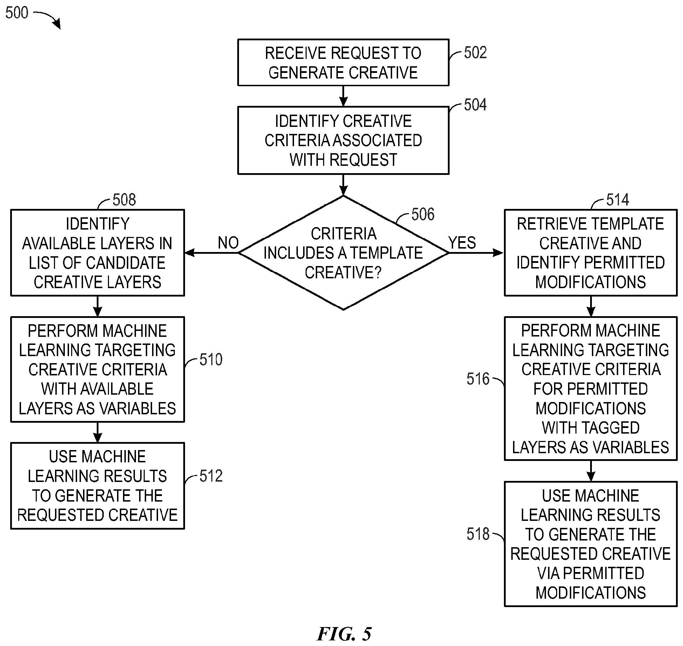

FIG. 5 is a flowchart, illustrating a process 500 for generating creatives using identified layers, in accordance with certain aspects of the current application. The process 500 begins with receiving a request to generate a creative (block 502). As mentioned herein, creatives may be generated in near-real time, enabling customization of creatives for a particular viewer, set of viewers, and/or viewer preferences specific to a current content viewing session. To achieve this, the request received in block 502 may proactively request creative generation for a set of upcoming slots in a current content streaming session (e.g., the request may be received at the start of the content selected for playback). Thus, process 500 may be implemented for a plurality of creatives requested to be generated for a current viewing session. In some cases, when the request is associated with a creative to be placed within a threshold amount of time (e.g., possibly not leaving enough time for creative generation), a pre-existing creative may be provided for presentation first, delaying presentation of the to-be-generated creative, such that additional generation time may be afforded for the creative generation.

In response to receiving the request to generate the creative, the creative generation criteria is identified (block 504). For example, the generation criteria may be extracted from the received request. In some cases, this criteria may be provided in a natural language prompt and extracted via natural language processing. In some aspects, one or more variable payloads may be provided in the request, indicating particular generation criteria. In some cases, for example, the criteria may indicate the particular viewers, demographic information of the viewers, and/or the particular viewer's preferences. In some cases, the criteria may specify a particular template creative to use to generate the creative. In some cases, a particular brand and/or product associated with a particular campaign to be satisfied may be identified in the criteria.

A determination is made as to whether the generation criteria includes a template creative (block 506). For example, in some instances, the request may include an indication of a creative to mimic and/or use as a base creative starting point. When a natural language prompt provides such a request, the prompt might look something like: "Generate a creative for Product Y, in the style of Creative 123 for user 456", where a creative with the identifier of 123 is the template creative.

When no template creative is included in the criteria, a custom creative may be generated without a template creative. To do this, available creative layers are identified from the List of Candidate Creative Layers (block 508) (e.g., the curated list resulting from process 300 of FIG. 3).

Machine learning may be performed, targeting output of a custom creative that adheres to the generation criteria, using at least a subset of the available layers as variables (block 510). For example, the criteria may indicate that the custom creative is "for user 456". In one aspect, a user profile for the user identifier 456 may indicate that the user is a 20 year old woman. Using machine learning, interests of a 20 year old woman may be identified and used as generation criteria. In another aspect, the user profile for the user identifier 456 may indicate that the user is 10 year old boy. Using machine learning, interests of a 10 year old boy may be identified and used as generation criteria. Further, suitability variables for this demographic and/or personalized user (e.g., lacking violence and/or profanity, child humor sentiment, popular children's talent (e.g., actor), etc.) may also be identified. Such identification may occur through machine learning and/or explicit personal preferences indicated in the user's electronic profile. Creative layers that match this generation criteria are selected for possible use in the custom creative, while layers that do not match may be filtered out. The machine learning model may derive combinations of the selected creative layers to identify one or more possible combinations, resulting in one or more generated custom creatives (block 512), which may be returned in a response to the request. When more than one custom creative is generated, a supplemental process, such as the auditing process described above, may be used to select a preferred one of the custom creatives to present. The alternative custom creatives may be provided as backup alternatives (e.g., when a client player or other component identifies that the preferred custom creative is not to be plated (e.g., based upon additional criteria, etc.).

Returning to decision block 506, when a template creative is included, the template creative is retrieved and, if present, indications of the permitted modifications to the template creative are identified (block 514). For example, the template creatives may include metadata that indicate particular features that may or may not be modified. In some instances, the permissions may indicate that the talent may not be changed, or that the talent may be changed, but certain features (e.g., gender and/or age range of the replacement talent) may not be changed. In some instances, the permission may provide an indication of particular features (e.g., background music) that may be changed, while all unmentioned features may not be changed.

Machine learning is performed, targeting an output custom creative that is limited in divergence from the template creative in accordance with the permissions (block 516). For example, as described above, the template creative may be tagged with creative features permitted for alteration. The tagging may be provided as alterable variables to a machine learning engine to create a customized creative. The machine learning engine, using these variables, may generate the requested creative(s) subject to the permissions (block 518).

In an aspect, creative generation may be further customized based on user feedback. For example, after an AI generated creative is delivered to the user, the user may be given an option to provide feedback on the creative. The user may provide feedback in natural language form or rate an advertisement. Based on the users feedback, the system may update the user's profile and/or modify creatives that have been queued for the user in future advertisement breaks. The system may modify the creatives by adding elements similar to the elements that the user liked or by removing elements similar to elements that the user disliked.

In another aspect, before any creatives are displayed, the user may include in the request for certain creatives not to be displayed. For example, the user may be watching a television show with children, and the user may request that no ads inappropriate for children be displayed (e.g., no ads with horror elements, no ads with violence, no ads with drugs or alcohol, no ads for movies with R ratings).

While only certain features of the present disclosure have been illustrated and described herein, many modifications and changes will occur to those skilled in the art. It is, therefore, to be understood that the appended claims are intended to cover all such modifications and changes as fall within the scope of the present disclosure.

The processes provided may be computer-implemented processes, in which the blocks or steps of the processes are performed by a processing system (e.g., having one or more processors), which may, for example, belong to an advertiser and/or a media business operating a platform (e.g., digital streaming service) in business with the advertiser. The order or chronology of steps or blocks of the processes and described in detail above are non-limiting, and, indeed, may other orders or chronologies are also possible. Further, certain steps or blocks of these processes described in detail above may be optional. Further still, other steps or blocks not illustrated may be included in these processes.

## Claims

1. A system (100), comprising:
a creative engine (102), comprising one or more generative artificial intelligence (AI) models, the creative engine (102) configured to:
receive an electronic request to generate a custom creative;
identify available creative layers for use in the custom creative based at least in part upon one or more data tags associated with digital content;
select a subset of the available creative layers based upon generation criteria associated with the electronic request;
use the one or more generative AI models to generate the custom creative by combining the subset of available creative layers; and
generate and provide an electronic response to the electronic request, wherein the electronic response comprises an indication of the custom creative.

2. The system (100) of claim 1, comprising a content contextualization service (124), configured to:
generate the one or more data tags, by analyzing a subset of the digital content using AI, one or more large language models applied to one or more transcripts or subtitles of the subset of the digital content, or both, wherein optionally the content contextualization service (124) is configured to identify licensing arrangements associated with the one or more data tags; and
wherein the content contextualization service (124), the creative engine (102), or both are optionally configured to:
identify the available creative layers based upon the licensing arrangements.

3. The system (100) of any preceding claim, comprising a creative request interface (106) that comprises an application programming interface (API) configured to:
enable a creative provisioning service (114), a creative request dashboard, or both to submit criteria for the custom creative; and
generate and transmit the electronic request to the creative engine (102) in accordance with the submitted criteria for the custom creative, wherein the API is optionally configured to receive the submitted criteria in a natural language prompt (110); and
the creative request interface (106) optionally comprises a large language model configured to interpret the natural language prompt (110) to identify the criteria.

4. The system (100) of any preceding claim, wherein the creative engine (102) is configured to:
determine whether a pre-existing creative is in accordance with the generation criteria; and
when a pre-existing creative is in accordance with the generation criteria, preserve processing resources, by providing the pre-existing creative in the provided electronic response in lieu of generating the custom creative and providing the custom creative in the electronic response.

5. The system (100) of claim 3, comprising:
a viewer contextualization service (120), configured to identify supplemental criteria based at least in part upon the criteria submitted by the creative provisioning service (114), the creative request dashboard, or both.

6. The system (100) of claim 3, wherein the content provisioning service comprises an advertisement service that submits the criteria in response to a client device providing playback of primary content that comprises an advertisement break to insert, on-the-fly, an advertisement selected by the advertising service.

7. The system (100) of any preceding claim, wherein the creative engine (102) is configured to:
identify whether the generation criteria comprises an indication of a template creative (126); and
when the generation criteria comprises the template creative (126), generate the custom creative based upon the template creative (126)
wherein the generation criteria optionally comprises the indication of the template creative (126); and
wherein the creative engine (102) is optionally configured to:
identify one or more modification permissions of the template creative (126); and
generate the custom creative in accordance with the one or more modification permissions.

8. A computer-implemented method, comprising:
receiving an electronic request to generate a custom creative from a digital content;
identifying available creative layers for use in the custom creative based at least in part upon one or more data tags associated with the digital content, the one or more data tags indicating creative features of the digital content;
selecting, via machine learning, a subset of the available creative layers based upon generation criteria associated with the electronic request;
generating, via one or more generative artificial intelligence (AI) models, the custom creative by combining the subset of available creative layers; and
generating and providing an electronic response to the electronic request, wherein the electronic response comprises an indication of the custom creative.

9. The computer-implemented method of claim 8, comprising:
generating the one or more data tags, by:
applying one or more large language models to one or more transcripts or subtitles of the digital content to identify at least a subset of the creative features of the digital content; and
associating the data tags with the digital content, based upon the identified at least subset of the creative features of the digital content.

10. The computer-implemented method of claim 8 or 9, comprising:
receiving submission of criteria for the custom creative via an application programming interface (API);
generating and transmitting the electronic request in accordance with the submitted criteria for the custom creative and optionally:
receiving the submitted criteria in a natural language prompt (110); and
interpreting the natural language prompt (110) via a natural language processor to identify the criteria.

11. The computer-implemented method of any of claims 8 to 10, comprising:
determining whether a pre-existing creative has been generated in accordance with the generation criteria; and
when a pre-existing creative has been generated in accordance with the generation criteria, preserve processing resources, by providing the pre-existing creative that is in accordance with the generation criteria in the provided electronic response in lieu of generating the custom creative and providing the custom creative in the electronic response.

12. The computer-implemented method of any of claims 8 to 11, comprising:
receiving ad criteria from an electronic advertisement service in response to a client device providing playback of primary content that comprises an advertisement break;
generating the custom creative in accordance with the ad criteria; and
providing the custom creative for on-the-fly insertion in the advertisement break.

13. The computer-implemented method of any of claims 8 to 12, comprising:
identifying whether the generation criteria comprises an indication of a template creative (126); and
when the generation criteria comprises the template creative (126), generate the custom creative based upon the template creative (126).

14. A tangible, non-transitory, computer-readable medium, comprising computer-readable instructions that, when executed by one or more processors of one or more computers, cause the one or more computers to:
receive an electronic request to generate a custom creative from a digital content;
identify available creative layers for use in the custom creative based at least in part upon one or more data tags associated with the digital content, the one or more data tags indicating creative features of the digital content;
select, via machine learning, a subset of the available creative layers based upon generation criteria associated with the electronic request;
generate, via one or more generative artificial intelligence (AI) models, the custom creative by combining the subset of available creative layers; and
generate and provide an electronic response to the electronic request, wherein the electronic response comprises an indication of the custom creative.

15. The tangible, non-transitory, computer-readable medium of claim 14, comprising computer-readable instructions that, when executed by the one or more processors of the one or more computers, cause the one or more computers to:
receive ad criteria from an electronic advertisement service in response to a client device providing playback of primary content that comprises an advertisement break;
generate the custom creative in accordance with the ad criteria; and
provide the custom creative for on-the-fly insertion in the advertisement break.
